# EUROPEAN PATENT APPLICATION

(11) **EP 2 572 969 A1**
(43) Date of publication of application: **27.03.2013**
(21) Application number: 12179838.3
(22) Date of filing: 09.08.2012
(51) Int. Cl.: B62J 99/00, B62M 6/85

(54) **Solar power device used in bicycle**

(30) Priority: 26.09.2011 TW 100218006
(71) Applicant: Jintex Corporation Ltd., Tao-Yuan Hsien (TW)
(72) Inventor: Tsai, Tsung-Yu, Kaohsiung City (TW); Ho, Chih-Ting, Kaohsiung City (TW)
(74) Representative: Viering, Jentschura & Partner

(57) **Abstract**

A solar power device (1) used in a bicycle includes at least one flexible dye sensitized solar cell or DSCC (10) provided on the bicycle, a power source processing unit (12) comprising at least one rechargeable battery (121) and a control circuit board (123), and a load electrically connected to the rechargeable battery. The control circuit board is provided with at least one electronic component electrically connected to the rechargeable battery and the flexible dye sensitized solar cell for converting an electric current generated by the flexible dye sensitized solar cell into a charging current to charge the rechargeable battery. The present invention employs the flexible dye sensitized solar cell that can be tightly adhered to a frame of the bicycle easily without affecting the external appearance of the bicycle.

## Description

### FIELD OF THE INVENTION

The present invention relates to a power-generating device used in a bicycle, and in particular to a solar battery used in a bicycle.

### BACKGROUND OF THE INVENTION

Taiwan Utility Patent Application No.097212236 entitled "Solar Battery Used In Bicycle" discloses a solar battery used in a bicycle, which includes a main body, at least one outer plate, and at least one solar plate. The interior of the main body is stored with electricity necessary for the operation of the bicycle. Each outer plate is pivotally provided on an outer surface of the main body. The bottom of each outer plate is provided with at least one pivotal piece combined with the main body, so that each outer plate can rotate outwardly relative to the main body. Each solar plate is fixedly provided on an inner surface of the outer plate, thereby absorbing sunlight and converting the solar energy into electricity. By this arrangement, a solar battery is obtained for acting as an auxiliary power for a bicycle. However, the solar battery disclosed in Taiwan Utility Patent Application No.097212236 cannot be used when a rider is riding the bicycle.

### SUMMARY OF THE INVENTION

An objective of the present invention is to provide a solar power device used in a bicycle, in which a flexible dye sensitized solar cell (DSSC) is used to be tightly adhered onto the body of the bicycle easily. In this way, the problem that the conventional solar battery cannot be easily used in the bicycle is solved without affecting the external appearance of the bicycle.

In order to achieve the above objective, the present invention provides a solar power device used in a bicycle, comprising: at least one flexible dye sensitized solar cell provided on the bicycle; a power source processing unit comprising at least one rechargeable battery and a control circuit board, wherein the control circuit board is provided with at least one electronic component, the electronic component is electrically connected to the rechargeable battery and the flexible dye sensitized solar cell for converting an electric current generated by the flexible dye sensitized solar cell into a charging current to charge the rechargeable battery; and a load electrically connected to the rechargeable battery.

### BRIEF DESCRIPTION OF THE DRAWINGS

To enable examiners to gain insight into the structure, features, and advantages of the present invention, the present invention is hereunder illustrated with preferred embodiments and accompanying drawings, wherein:
FIG. 1 is a schematic view showing the structure of the solar power device used in a bicycle according to the present invention;
FIG. 2 is a block view showing the power source processing unit of the solar power device used in a bicycle according to the present invention; and
FIG. 3 is a schematic view showing the structure of the flexible dye sensitized solar cell of the solar power device used in a bicycle according to the present invention.

### DETAILED DESCRIPTION OF THE INVENTION

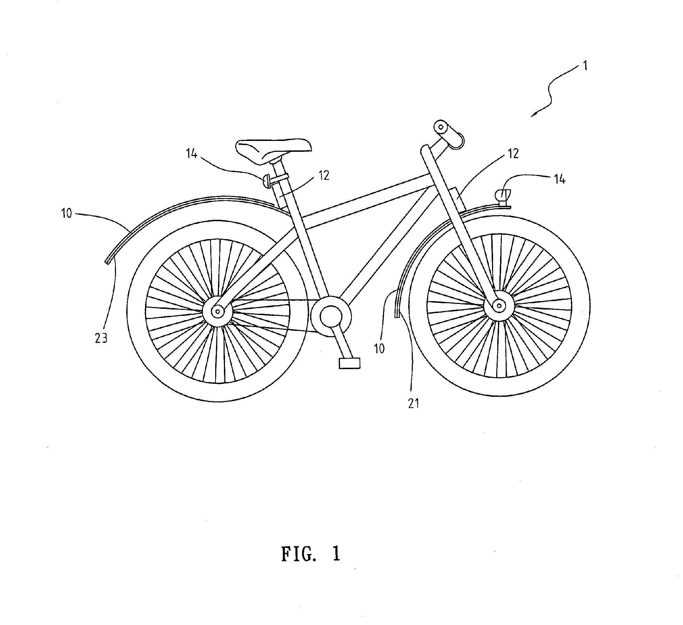

Please refer to FIGS. 1 to 3. The present invention provides a solar power device 1 used in a bicycle. Since the solar cell used in the solar power device 1 of the present invention is a flexible dye sensitized solar cell (DSSC), the flexibility of the flexible dye sensitized solar cell can be bent to have a curved surface which can be tightly adhered onto the body of the bicycle easily without breaking the structure of the flexible dye sensitized solar cell.

The solar power device 1 of the present invention includes at least one flexible dye sensitized solar cell (DSSC) 10, a power source processing unit 12, and a load 14, which are described as follow. The flexible dye sensitized solar cell 10 is used to receive sunlight and converting the solar energy into electricity to thereby generate an electric current. The number of the flexible dye sensitized solar cell 10 is not limited to one. In a preferred embodiment, a plurality of flexible dye sensitized solar cells 10 are adhered onto an upper surface of a front mudguard 21 and an upper surface of a rear mudguard 23 of the bicycle. Further, the flexible dye sensitized solar cell 10 may be adhered to other places of the bicycle based on the user's demands, such as a front surface of a basket (not shown). The front surface of the basket of the bicycle is made inclined forwardly by, for example, 45 degrees, so that more sunlight can illuminate the front surface of the basket.

Furthermore, in order to increase the number of the flexible dye sensitized solar cells 10, the flexible dye sensitized solar cells 10 may be provided on a frame of the bicycle, such as a surface of a steel frame of the bicycle.

The flexible dye sensitized solar cells 10 may be electrically connected to each other by serial connection or parallel connection based on practical demands.

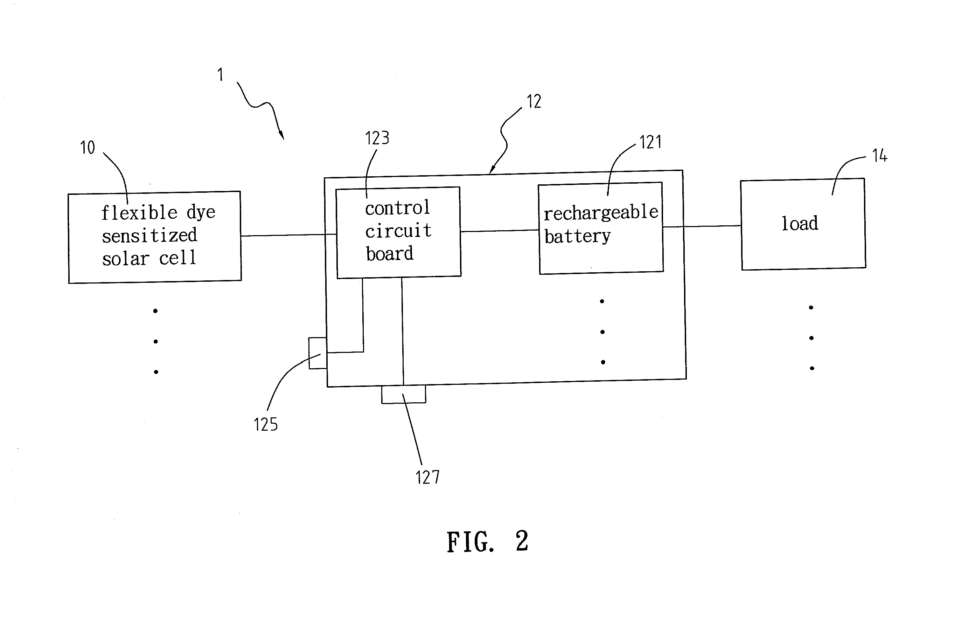

Please refer to FIG. 2. The power source processing unit 12 comprises at least one rechargeable battery 121 and a control circuit board 123. The control circuit board 123 is provided with at least one electronic component. The electronic components are electrically connected to the rechargeable battery 121 and the flexible dye sensitized solar cell 10. The electronic components on the control circuit board 123 are used to convert an electric current generated by the flexible dye sensitized solar cell 10 into a charging current to charge the rechargeable battery 121. The charging circuit provided in the control circuit board 123 may be embodied as the conventional charging circuit. Preferably, the charging circuit may be capable of charging the rechargeable batteries 121 respectively. In this way, the rechargeable battery 121 can supply electricity to the load 14 immediately.

The rechargeable battery 121 may be selected from lithium rechargeable batteries, Ni-H rechargeable batteries, or other kinds of rechargeable batteries. The number of the rechargeable batteries 121 is not limited to one only.

The rechargeable batteries 121 can be electrically to each other by serial connection or parallel connection based on practical demands.

The solar power device 1 of the present invention is further provided with a direct current (DC) power input jack 125 for connecting to an external DC power source such as a 5V DC power source or a DC power source converted from 110V AC public power source. The external DC power source is used to provide a charging circuit for charging the rechargeable battery 121, thereby replacing the electric current generated by the flexible dye sensitized solar cell 10. The DC power input jack 125 may be embodied as a conventional DC round pin input jack, a USB-type jack or a conventional 3C rechargeable jack.

In some special cases such as cloudy days with little sunshine, the electricity generated by the flexible dye sensitized solar cell 10 cannot fully charge the rechargeable battery 121. At this time, the DC power input jack 125 is useful. The user can connect an external DC power source to the DC power input jack 125 to generate a charging current for charging the rechargeable battery 121. In this way, the rechargeable battery 121 can be fully charged.

The power source processing unit 12 may be fixed to or hung on the frame of the bicycle. For example, the power source processing unit 12 can be fixed onto a pipe of a steel frame of the bicycle by screws. Of course, the power source processing unit 12 can be selectively detached from the bicycle to replace a new rechargeable battery 121. Alternatively, when the power source processing unit 12 breaks down, another new power source processing unit 12 can be replaced in virtue of the above-mentioned structure.

The load 14 is electrically connected to the rechargeable battery 121 to thereby use the electricity stored in the rechargeable battery 121. In the present embodiment, the load 14 is embodied as an illuminating apparatus such as lamps provided on the front mudguard 21 and the pipe of the steel frame of the bicycle, respectively. Of course, the illuminating apparatus may be provided on other suitable positions of the bicycle.

Moreover, the solar power device 1 is further provided with a DC power output jack 127 for externally connecting to the load 14. The load 14 may be embodied as a load of a 3C portable electronic device such as a Smart phone, a tablet computer, a drive recorder, a GPS navigator or the like. By this arrangement, the rechargeable battery 121 can charge the portable 3C electronic device via the DC power output jack 127. The DC power output jack 127 may be configured as the conventional DC round pin jack or a USB-type jack.

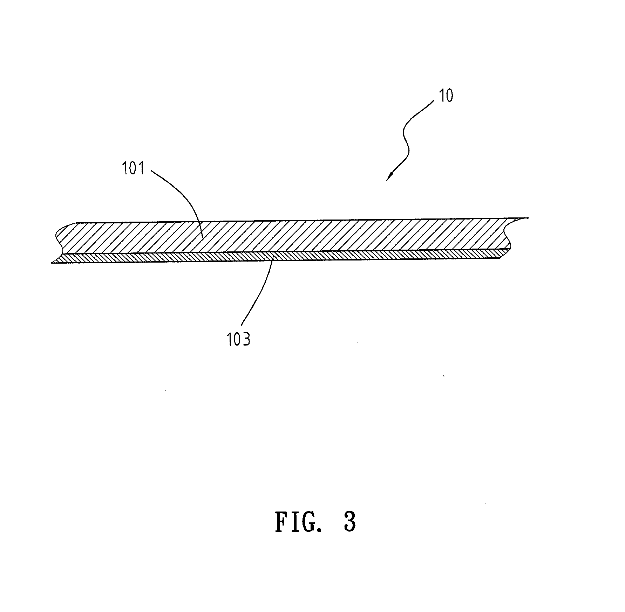

FIG. 3 is a schematic view showing the structure of the flexible dye sensitized solar cell of the present invention. The flexible dye sensitized solar cell 10 includes a main body 101 and an adhesive layer 103. The main body 101 of the flexible dye sensitized solar cell is constituted of the conventional flexible dye sensitized solar cell, and the adhesive layer 103 may be embodied as a double-sided tape or other adhesives.

Alternatively, the flexible dye sensitized solar cell 10 can be fixed onto the bicycle by mortise-and-tenon joints or other fixing measures.

According to the present invention, since the solar power device 1 employs the flexible dye sensitized solar cell that can be tightly adhered onto the body of the bicycle easily without affecting the external appearance of the bicycle, the problem of how to provide power source to the bicycle rider is solved. Therefore, the present invention has advantageous features over the prior art.

Therefore, the present invention really demonstrates novelty, inventive steps and industrial applicability, which conforms to the requirements for an invention patent.

Although the present invention has been described with reference to the foregoing preferred embodiment, it will be understood that the invention is not limited to the details thereof. Various equivalent variations and modifications can still occur to those skilled in this art in view of the teachings of the present invention. Thus, all such variations and equivalent modifications are also embraced within the scope of the invention as defined in the appended claims.

## Claims

1. A solar power device used in a bicycle, comprising:
at least one flexible dye sensitized solar cell provided on the bicycle;
a power source processing unit including at least one rechargeable battery and at least one control circuit board, wherein the control circuit board is provided with at least one electronic component, the electronic component is electrically connected to the rechargeable battery and the flexible dye sensitized solar cell for converting an electric current generated by the flexible dye sensitized solar cell into a charging current to charge the rechargeable battery; and
a load electrically connected to the rechargeable battery.

2. The solar power device used in a bicycle of claim 1, wherein the flexible dye sensitized solar cell is selectively provided at a front mudguard, a rear mudguard, other suitable positions or combination thereof on the bicycle.

3. The solar power device used in a bicycle of claim 1, wherein the number of the load is at least one.

4. The solar power device used in a bicycle of claim 3, wherein the load is an illuminating apparatus provided on the bicycle.

5. The solar power device used in a bicycle of claim 1, wherein the load is a portable electronic device, thereby the rechargeable battery can charge the portable electronic device.

6. The solar power device used in a bicycle of claim 1, wherein the rechargeable battery is selected from a lithium rechargeable battery or a Ni-H rechargeable battery.

7. The solar power device used in a bicycle of claim 1, wherein the rechargeable battery is one detachable from the power source processor.

8. The solar power device used in a bicycle of claim 1, wherein the electronic components comprise at least one direct current input jack for externally connecting to an external DC power source, the external DC power source is configured to provide a charging current for charging the rechargeable battery, thereby replacing an electric current generated by the flexible dye sensitized solar cell.

9. The solar power device used in a bicycle of claim 1, wherein the electronic components at least comprise a direct current power output jack electrically connected to the rechargeable battery.
